# EUROPEAN PATENT APPLICATION

(11) **EP 4 075 836 A1**
(43) Date of publication of application: **19.10.2022**
(21) Application number: 19955419.7
(22) Date of filing: 11.12.2019
(51) Int. Cl.: H04W 8/00, H04W 76/10, H04W 12/06, H04W 84/10

(54) **WIRELESS CONNECTION SYSTEM, INFORMATION TERMINAL, DISPLAY DEVICE, AND WIRELESS CONNECTION METHOD**

(71) Applicant: Maxell, Ltd., Kyoto 618-8525 (JP)
(72) Inventor: AKIYAMA, Hitoshi, Otokuni-gun, Kyoto 618-8525 (JP); HASHIMOTO, Yasunobu, Otokuni-gun, Kyoto 618-8525 (JP); TAKAMIZAWA, Naohisa, Otokuni-gun, Kyoto 618-8525 (JP)
(74) Representative: Mewburn Ellis LLP
(86) International application number: PCT/JP2019/048538
(87) International publication number: WO 2021/117170

(57) **Abstract**

A technique capable of reducing the time and effort of a user for an input operation of authentication information at the time of wireless connection between an information terminal of the user and a display device, and realizing appropriate wireless connection between desired devices even in multiple-to-multiple environment is provided. This wireless connection system executes wireless connection between an information terminal 1 of a user and a display device 2 installed in environment. In a case where an information terminal existing in the vicinity thereof is detected, the display device 2 displays device ID information related to authentication for wireless connection with the detected information terminal 1 (or an image obtained by coding it) on a display screen 20. The information terminal 1 confirms whether the device ID information read from the display screen 20 match device ID information of an own device or not, and establishes wireless connection using an authentication ID for wireless connection with the display device 2 after matching is confirmed. The display device 2 establishes wireless connection with the information terminal 1 using an authentication ID.

## Description

### TECHNICAL FIELD

The present invention relates to a technique of a wireless connection system, an information terminal, and a display device.

### BACKGROUND ART

Conventionally, wireless connection may be made between an information terminal such as a head mounted display (HMD), a wearable terminal, a smartphone, or a tablet terminal, which is worn or carried by a user, and a display device such as a tablet terminal or a television device, which is installed in the environment. In particular, in a case where the number of inexpensive display devices increases, it is supposed that a large number of display devices is installed in environment including stores, public spaces, vehicles, and the like. It is also supposed a scene that a plurality of information terminals of a plurality of unspecified users and a plurality of display devices make wireless connection in a multiple-to-multiple relationship in the environment. For example, display devices such as tablet terminals are respectively prepared on tables in a store such as a restaurant. A user who is a customer wirelessly connects his or her information terminal to a selected display device, and uses display of a menu, ordering of goods or services, payment, and other functions.

As an example of a conventional technique, Japanese Patent Application Laid-Open Publication No. 2010-136238 (Patent Document 1) can be cited. Patent Document 1 describes that a process of recognizing and storing communication devices as communication partners with each other is simplified for a user, communication devices that can greatly develop a cooperation function among the communication devices in a market and its usage are provided, and the following. This communication device stores identification information of a communication device capable of wireless communication; receives identification information from communication devices in a communicable area; presents a list of communication devices that can communicate at that time on the basis of the received identification information and the stored identification information when wireless communication is started; receives selection of a communication device from the presented list; and starts wireless communication with the selected communication device. Further, this communication device captures a bar code including identification information of a communication device, and obtains the identification information of the communication device from the bar code information.

### RELATED ART DOCUMENTS

### PATENT DOCUMENTS

Patent Document 1: Japanese Patent Application Laid-Open Publication No. 2010-136238

### SUMMARY OF THE INVENTION

### PROBLEMS TO BE SOLVED BY THE INVENTION

As described above, there is a need for each user to wirelessly connect his or her information terminal to a desired display device among a plurality of display devices and use a display function in the environment. In such a situation, in the multiple-to-multiple relationship between a plurality of information terminals and a plurality of display devices, each information terminal and each display device need to make appropriate and secure wireless connection with a selected and authorized partner. Since it is the wireless connection, there are a case where a plurality of display devices exists within a range that radio waves reach from an information terminal of a user, and a case where a plurality of information terminals exists within a range that radio waves reach from a display device. Further, there are a risk that an information terminal of a user is wirelessly connected to a non-target display device that does not exist in front of the information terminal, and a risk that a display device is wirelessly connected to a non-target information terminal that does not exist in front of the display device. If unlimited wireless connection between multiple devices and multiple devices is allowed, there are problems in terms of security and resources. Therefore, it is necessary to limit and control wireless connection using authentication.

Conventionally, in wireless communication interfaces such as Bluetooth (registered trademark) and Wi-Fi (registered trademark), it is necessary to use authentication identification information (authentication ID) in order to make secure wireless connection. For example, in case of Bluetooth, a specified authentication ID called a passkey (or a passcode, etc.) is used. For example, in case of Wi-Fi, a specified authentication ID such as SSID and password is used. For the sake of explanation, the passkey and the like are collectively referred to as an authentication ID.

However, for example, in a case where an information terminal such as an HMD (in other words, a wireless device having a wireless communication function) is to be wirelessly connected to a display device, information input means provided in the information terminal is limited. Therefore, it may be troublesome or difficult for the user to input the authentication ID. For example, conventionally, a general HMD does not include an input device such as a keyboard or a touch panel.

It is an object of the present invention to provide a technique capable of reducing the time and effort of a user for an input operation of authentication information at the time of wireless connection, and realizing appropriate and secure wireless connection between a desired information terminal and a desired display device even in multiple-to-multiple environment with respect to a technique of wirelessly connecting an information terminal of the user to a display device.

### MEANS FOR SOLVING THE PROBLEM

A representative embodiment of the present invention has a configuration described below. A wireless connection system according to one embodiment is a wireless connection system for executing wireless connection between an information terminal worn or carried by a user and a display device installed in environment. In this case, the display device is configured to: display, in a case where an information terminal existing in a vicinity thereof is detected, device ID information related to authentication for wireless connection with the detected information terminal or an image obtained by coding the device ID information on a display screen; and establish the wireless connection by using an authentication ID for the wireless connection with the information terminal. Further, the information terminal is configured to: read the device ID information or the image on the display screen of the display device; confirm whether the read device ID information matches device ID information of an own device or not; and establish, after the matching is confirmed, the wireless connection using the authentication ID for the wireless connection with the display device.

### EFFECTS OF THE INVENTION

According to the representative embodiment of the present invention, it is possible to reduce the time and effort of a user for an input operation of authentication information at the time of wireless connection, and realize appropriate and secure wireless connection between a desired information terminal and a desired display device in multiple-to-multiple environment with respect to a technique of wirelessly connecting an information terminal of the user to a display device.

### BRIEF DESCRIPTIONS OF THE DRAWINGS

FIG. 1 is a view illustrating a configuration of a wireless connection system according to a first embodiment of the present invention;
FIG. 2 is a view illustrating an environment example and a procedure outline in a wireless connection method according to the first embodiment;
FIG. 3 is a view illustrating an example of an appearance configuration of an information terminal (HMD) according to the first embodiment;
FIG. 4 is a view illustrating an example of a functional block configuration of the information terminal according to the first embodiment;
FIG. 5 is a view illustrating an example of a functional block configuration of a display device according to the first embodiment;
FIG. 6 is a view illustrating a processing sequence between the information terminal and the display device according to the first embodiment;
FIG. 7 is a view illustrating an example of a device list screen according to the first embodiment;
FIG. 8 is a view illustrating an example of a code screen according to the first embodiment;
FIG. 9 is a view illustrating a processing sequence between the information terminal and the display device by the wireless connection system and the method according to the first embodiment of the present invention;
FIG. 10 is a view illustrating an example of a device list screen according to a second embodiment;
FIG. 11 is a view illustrating a display example by an information terminal (HMD) according to the second embodiment;
FIG. 12 is a view illustrating a processing sequence between an information terminal and a display device by a wireless connection system and a method thereof according to a third embodiment of the present invention;
FIG. 13 is a view illustrating an example of a device code list screen according to the third embodiment;
FIG. 14 is a view illustrating a processing sequence between an information terminal and a display device by a wireless connection system and a method thereof according to a fourth embodiment of the present invention; and
FIG. 15 is a view illustrating an example of a code screen according to the fourth embodiment.

### DETAILED DESCRIPTION OF EMBODIMENTS

Hereinafter, embodiments of the present invention will be described in detail with reference to the drawings. Note that in all drawings, the same reference numerals are respectively in principle applied to the same portions, and repeated explanation thereof will be omitted.

### (First Embodiment)

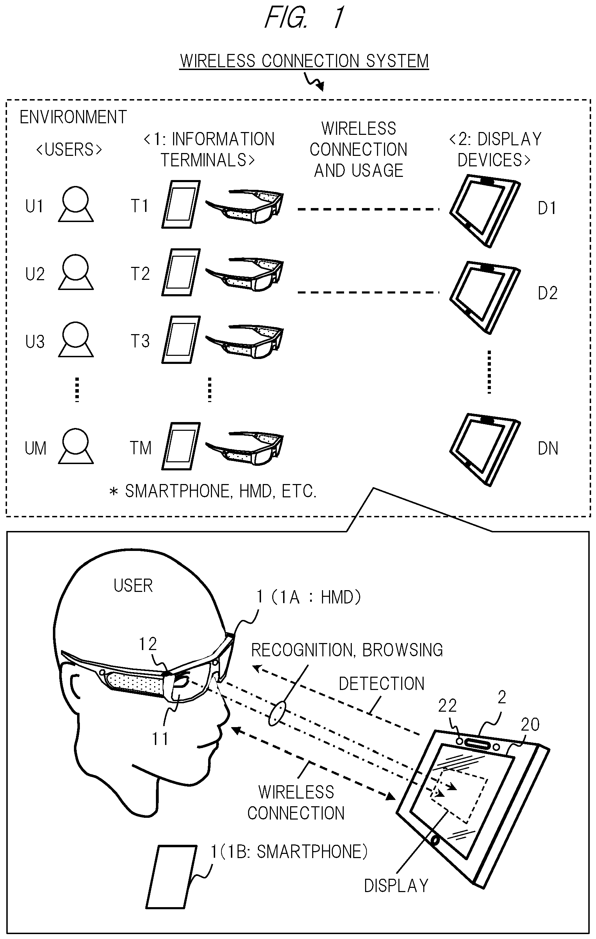

A wireless connection system and a method thereof according to a first embodiment of the present invention will be described with reference to FIG. 1 to FIG. 8.

### [Wireless Connection System]

FIG. 1 illustrates a configuration of a wireless connection system according to the first embodiment. As illustrated on an upper side of FIG. 1, the wireless connection system according to the first embodiment includes a plurality (M) of information terminals 1 of a plurality (M) of users and a plurality (N) of display devices 2 in certain environment. This system is a multiple-to-multiple system, that is, a system in which wireless connection can be made between the plurality (M) of information terminals 1 and the plurality (N) of display devices 2. This wireless connection system executes wireless connection between an information terminal 1 of a user and a display device 2 selected by the user with authentication.

In this wireless connection system, by basically combining one of a plurality (M) of unspecified devices with one of a plurality (N) of unspecified devices freely in the environment, wireless connection between one desired information terminal and one desired display device is permitted for each user. Authentication (including device check) in this wireless connection system is authentication for wirelessly connect one desired information terminal of the user to one display device appropriately and simply between the plurality of devices and the plurality of devices.

The plurality (M) of users is respectively indicated by users U1, U2, U3, ......, and UM. The plurality (M) of information terminals 1 is respectively indicated by information terminals T1, T2, T3, ......, and TM. The plurality (N) of display devices 2 is respectively indicated by display devices D1, D2, ......, and DN. The number M of the information terminals 1 may be different from the number N of the display devices 2, or they may be M ≧ 1 and N ≧ 1. Note that a one-to-multiple scene of one information terminal 1 and a plurality (N) of display devices 2 and a multiple-to-one scene of the plurality (M) of information terminals 1 and one display device 2 are also included within the applicable range of the present system and method.

For example, in the environment such as a store, the plurality (N) of display devices 2 that is permitted to be used by a user and the information terminal 1 that have succeeded in authentication is installed. The user wears or carries the information terminal 1 such as an HMD 1A, for example. Note that the information terminal 1 may temporarily be provided to the user in the environment such as the store.

This wireless connection system has a mechanism in which a desired selected display device 2 in front of a certain user among a plurality of display devices 2 can be connected wirelessly to an information terminal 1 of the user easily and surely in the environment. In this system, even in a case where the information terminal 1 is an HMD or the like, the time and effort required for the user to input an authentication ID is reduced, and a simple method that is highly convenient for the user can be provided. Further, in this system, even in a case where a large number of devices that are candidates for connection exist in the environment, it is possible to appropriately make wireless connection between the desired information terminal 1 and the desired display device 2, wireless connection between unintended devices is prevented, and security is enhanced. After the wireless connection between the information terminal 1 and the display device 2 is established, the user can utilize a display function and the like of the display device 2.

A lower side of FIG. 1 illustrates an outline of wireless connection between one information terminal 1 (for example, the HMD 1A) of one user and one display device 2. The information terminal 1 of the user typically corresponds to the HMD 1A (including smart glasses and the like) or a smartphone 1B, but is not limited to these. The display device 2 typically corresponds to a tablet terminal, but is not limited to this.

Each of the information terminal 1 and the display device 2 includes a wireless communication function. In particular, the wireless communication function is a wireless communication function such as a short-range or medium-range wireless communication function corresponding to the environment, and uses Bluetooth (registered trademark) as a wireless communication interface, for example. The display device 2 has a function of detecting nearby information terminals 1 in addition to the display function. For example, the display device 2 can detect the nearby information terminal 1 by detecting a beacon (radio signal) emitted by the information terminal 1 using the provided wireless communication function. Alternatively, the display device 2 may detect the nearby information terminals 1 by using a camera 22 and other sensors. Each of the information terminals 1 has a function of being able to read an image or information displayed on a display screen 20 of the display device 2. For example, the information terminal 1 recognizes an image or information in the display screen 20 from an image obtained by capturing the display screen 20 using a provided camera 12.

For example, a user looks at the display screen 20 of the display device 2 in a state where the user wears an HMD 1A. In a case where an information terminal 1 that appears in the vicinity is detected, the display device 2 displays authentication information for wirelessly connecting with the detected information terminal 1 on the display screen 20. The authentication information, which will be described later, is predetermined information such as a device name or an authentication ID, and is an image that can be read from the information terminal 1 side. In particular, the authentication ID such as a passkey corresponding to the wireless communication interface is displayed on the display screen 20 as a coded image.

The user looks at the authentication information of the display screen 20 through the information terminal 1. The information terminal 1 reads the authentication information of the display screen 20, and executes device check as for whether wireless connection between own device and the display device 2 is appropriate or not by using the device name (device ID information) contained in the authentication information. The information terminal 1 obtains the authentication ID by decoding the coded image associated with the own device name. The information terminal 1 establishes wireless connection with the display device 2 using the authentication ID.

Note that an operation after the wireless connection between the information terminal 1 and the display device 2 is not limited. The information terminal 1 communicates with the display device 2, and can thereby use functions such as the display function of the display device 2. For example, the user wirelessly connects the information terminal 1 to a desired display device 2 in a store, and can then browse a moving image or the like displayed on the display screen 20 of the display device 2. In the opposite way of thinking, it can be said that the display device 2 can use functions of the information terminal 1 thus wirelessly connected. Further, after use by the user, the wireless connection between the information terminal 1 and the display device 2 is cancelled. Further, in a case where the information terminal 1 is, for example, the HMD 1A, it is possible to display an image of augmented reality (AR) or the like on a display surface 11 so as to match the display of the display screen 20 of the display device 2.

### [Wireless Connection Method]

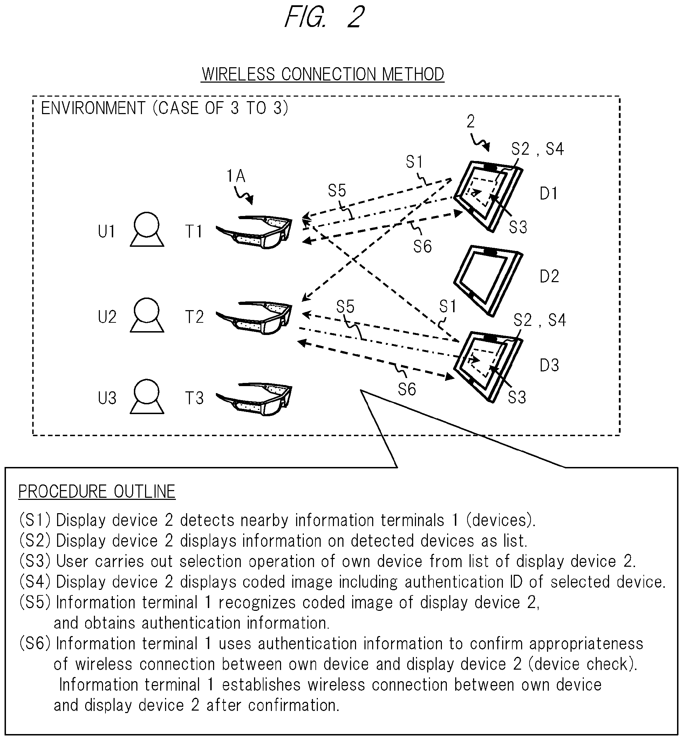

FIG. 2 illustrates an outline of a wireless connection method according to the first embodiment. An upper side of FIG. 2 illustrates, as an example of the environment, a case of a 3 to 3 relationship in which three information terminals 1 and three display devices 2 exist. For example, it is assumed that a user U1 wants to wirelessly connect his or her information terminal T1 to a desired display device D1. It is also assumed that a user U2 wants to wirelessly connect his or her information terminal T2 to a desired display device D3. It is also assumed that a user U3 just passes by, and does not carry out wireless connection with any display device 2.

Note that as an application, it is not a configuration in which unlimited wireless connection is permitted for the information terminals 1 and the display devices 2 of all users, but a configuration is also possible that only wireless connection between an information terminal 1 of a specific user and a specific display device 2 is permitted. This configuration can be controlled through settings of authentication. For example, a control in which the information terminal T1 of the user U1 and the information terminal T2 of the user U2 cannot be wirelessly connected to a display device D2 and other types of information terminals 1 of other users can be wirelessly connected to the display device D2 is possible.

A procedure outline in the wireless connection method according to the first embodiment is as follows. At Step S1, a display device 2 detects information terminals 1 and users, which exist in the vicinity of the own device in environment by arbitrary detecting means. For example, the display device 2 detects information terminals 1 and users, which exist within a range in front of the camera 22. More specifically, for example, the display device 2 may detect a state where there is a user who wears the HMD 1A in front of the own device. For example, it is assumed that each of the display device D1 and the display device D3 detects the information terminal T1 and the information terminal T2. Further, at this time, the display device 2 detects information terminals 1 (in other words, wireless devices), each of which has a function capable of wireless connection, and obtains information such as a device name the detected information terminal 1.

At Step S2, the display device 2 displays information on the detected information terminals 1, in other words, the wireless devices, each of which becomes a wireless connection candidate, on the display screen 20. Specifically, the display device 2 displays a list containing information on each of the one or more information terminals 1 detected as described above on the display screen 20 as a device list. Although details will be described later, display information at this time contains a device name or a device address, for example. For example, the display device D1 displays information on each of the information terminal T1 and the information terminal T2 thus detected. The display device D3 also executes the similar operation.

At Step S3, the user visually recognizes and confirms the information on the list of the display screens 20 of the display devices 2, and carries out an operation of selecting an item corresponding to the device name of the own information terminal 1 from the list.

At Step S4, the display device 2 displays an image (coded image) in which an authentication ID regarding the selected information terminal 1 is coded on the display screen 20. Although details will be described later, the coded image displayed at this time is an image in which the selected device name and a passkey generated by the display device 2 side are coded, for example. For example, a QR (Quick Response) (registered trademark) code can be applied to the code, but the code is not limited to this.

At Step S5, the information terminal 1 reads the coded image displayed on the display screen 20 of the selected display device 2 desired by the user by the camera 12, and obtains authentication information. Specifically, the information terminal 1 extracts the device name and the passkey from the above coded image by decoding. Note that at this time, the user may direct a direction of the camera 12 of the information terminal 1 (for example, the HMD 1A) to the display screen 20 of the display device 2, and does not need to carry out an input operation of the authentication ID or the like. For example, the information terminal T1 of the user U1 recognizes display information of the display device D1. Similarly, the information terminal T2 of the user U2 recognizes display information of the display device D3.

Further, the information terminal 1 executes device check processing of whether the device name obtained by the above extraction matches a device name of the own device or not. In case of the matching, it means that it has been confirmed that the wireless connection in a one-to-one relationship between this information terminal 1 and the display device 2 of the other party is establishes appropriate. The information terminal 1 sets the above passkey to the own device after confirming the appropriateness by the device check.

At Step S6, the information terminal 1 uses the authentication information (in particular, device ID information) to confirm appropriateness of the wireless connection between the own device and the display device 2 of the other party (device check, which will be described later). After the confirmation, the information terminal 1 establishes the wireless connection between the own device and the display device 2 by using the passkey, and the display device 2 establishes wireless connection with the information terminal 1 by using the passkey.

### [Information Terminal (HMD) - Appearance]

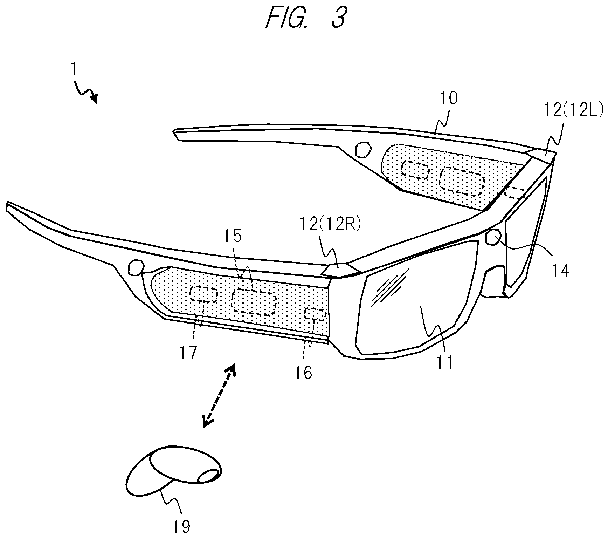

FIG. 3 illustrates an example of an appearance configuration in a case where the information terminal 1 is the HMD 1A. The HMD 1A includes the display surfaces 11, the camera 12, a distance measuring sensor 14, sensor units 15, microphones 16, speakers 17, and the like on a spectacle-shaped chassis 10. The display surface 11 is a transmissive display surface corresponding to positions of both eyes. The camera 12 includes a right side camera 12R and a left side camera 12L, for example. Further, as illustrated in FIG. 3, the HMD 1A may be attached with an operation unit 19 such as a remote controller as input means. The operation unit 19 executes wireless communication with a body of the HMD 1A.

### [Information Terminal (HMD) - Functional Block]

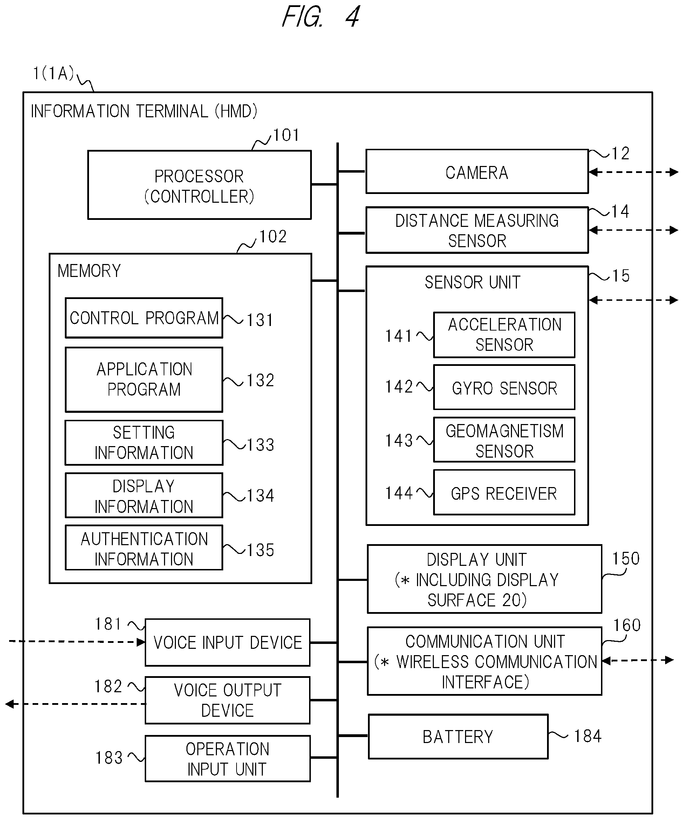

FIG. 4 illustrates an example of a functional block configuration in a case where the information terminal 1 is the HMD 1A. The HMD 1A, which is the information terminal 1, includes a processor 101, a memory 102, the camera 12, the distance measuring sensor 14, a sensor unit 15, a display unit 150, a communication unit 160, a voice input device 181, a voice output device 182, an operation input unit 183, a battery 184, and the like, and they are connected to each other by a bus or the like. The processor 101 is composed of a CPU, a ROM, a RAM, and the like, and corresponds to a controller that controls the entire HMD 1A. The memory 102 is composed of a RAM, a storage, or the like, and stores therein information and data such as a control program 131, an application program 132, setting information 133, display information 134, and authentication information 135. The camera 12 photographs an image of the outside world, and obtains image data. The distance measuring sensor 14 measures a distance to an object in the outside world. The sensor unit 15 includes various kinds of sensors including an acceleration sensor 141, a gyro sensor 142, a geomagnetism sensor 143, a GPS receiver 144, for example. The display unit 150 is a display device that includes the display surface 11, a display driving circuit, an optical system, and the like. The communication unit 160 includes a communication device corresponding to various kinds of communication interfaces. Specifically, the communication unit 160 includes a short-distance communication unit and a long-distance communication unit. In the present embodiment, the short-distance communication unit corresponds to Bluetooth as a wireless communication interface. The long-distance communication unit corresponds to wireless communication interfaces such as a mobile network and a wireless LAN, for example. The voice input device 181 includes the microphone 16 described above. The voice output device 182 includes the speaker 17 described above. The operation input unit 183 includes buttons provided on the chassis 10. Alternatively, the operation input unit 183 may be a portion that includes a wireless communication interface with the operation unit 19. The battery 184 supplies electric power to each unit.

The information terminal 1 realizes each function by the processor 101 executing processes on the basis of the control program 131 and the like. Each function includes a function of executing processes in a flow, which will be described later. Each function includes functions such as device check, camera image analysis, decoding of a QR code, which will be described later.

The setting information 133 is system setting information or user setting information related to the functions. The display information 134 is data for being displayed on the display surface 11. The authentication information 135 is information such as device ID information of the own device (a device name and a device address) and the authentication ID (the passkey) obtained from the display device 2.

### [Display Device - Functional Block]

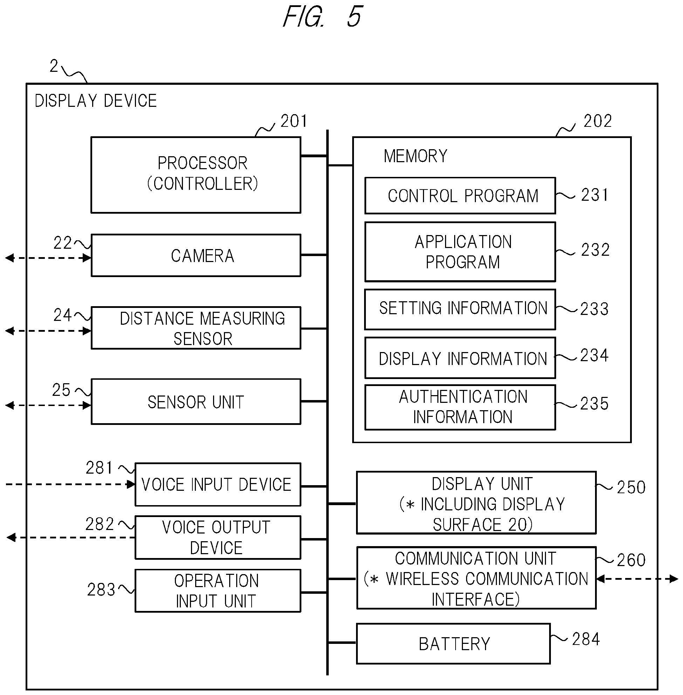

FIG. 5 illustrates an example of a functional block configuration of the display device 2. The display device 2 includes a processor 201, a memory 202, the camera 22, a distance measuring sensor 24, a sensor unit 25, a display unit 250, a communication unit 260, a voice input device 281, a voice output device 282, an operation input unit 283, a battery 284, and the like, hey are connected to each other by a bus or the like. The processor 201 is composed of a CPU, a ROM, a RAM, and the like, and corresponds to a controller that controls the entire display device 2. The memory 202 is composed of a RAM, a storage, or the like, and stores therein information and data such as a control program 231, an application program 232, setting information 233, display information 234, and authentication information 235. The camera 22 photographs an image of the outside world, and obtains image data. The distance measuring sensor 24 measures a distance to an object in the outside world. The sensor unit 25 includes various kinds of sensors including an acceleration sensor 241, a gyro sensor 242, a geomagnetism sensor 243, and a GPS receiver 244, for example. The sensor unit 25 may include a proximity sensor or the like. The display unit 250 is a display device that includes the display screen 20, a display driving circuit, and the like, for example, a touch panel. The communication unit 260 includes a communication device corresponding to various kinds of communication interfaces. Specifically, the communication unit 260 includes a short-distance communication unit and a long-distance communication unit. The short-distance communication unit corresponds to Bluetooth, for example. The long-distance communication unit corresponds to wireless communication interfaces such as a mobile network and a wireless LAN, for example. The voice input device 281 includes a microphone. The voice output device 282 incudes a speaker. The operation input unit 283 includes buttons provided on a chassis. The operation input unit 283 may include a keyboard or the like. In that case, it becomes easy for the user to input characters. The battery 284 supplies electric power to each unit. The display device 2 may also be attached with an operation unit such as a remote controller.

The display device 2 realizes each function by the processor 201 executing processes on the basis of the control program 231 and the like. Each function includes a function of executing processes in a flow, which will be described later. Each function includes functions such as device check, user detection, device detection, passkey generation, and QR code generation, which will be described later.

The setting information 233 is system setting information or user setting information related to the functions. The display information 234 is data for being displayed on the display screen 20. The authentication information 235 is information such as device ID information detected from the information terminal 1 and the generated authentication ID (the passkey).

### [Wireless Communication Interface]

In the first embodiment, Bluetooth is applied as a wireless communication interface for wireless connection between the information terminal 1 and the display device 2. In this case, a passkey in the Bluetooth standard is used as the authentication ID. Note that Wi-Fi may be applied as the wireless communication interface. In this case, an SSID and a password in the Wi-Fi standard is used as the authentication ID. This wireless connection system can similarly apply an authentication ID in accordance with a wireless communication interface to be applied.

### [Processing Flow (1)]

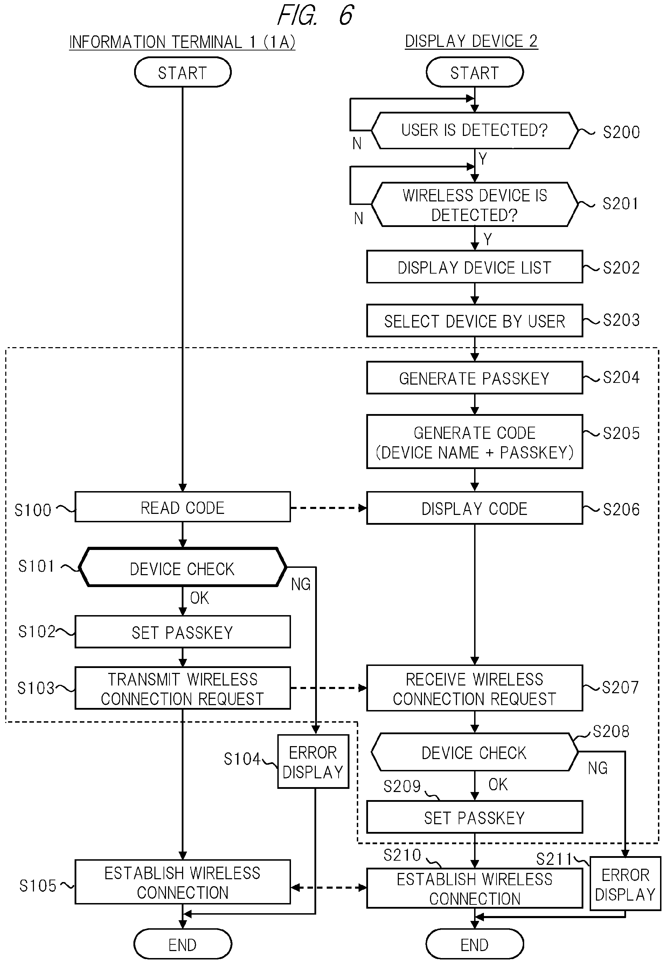

FIG. 6 illustrates a processing sequence including communication between the information terminal 1 (for example, the HMD 1A) and the display device 2 and a processing flow of each device in the wireless connection system and the method thereof according to the first embodiment. FIG. 6 has a flow including Steps S100, S101, ......, S105 for the information terminal 1, and a flow including Steps S200, S201, ......, and S211 for the display device 2.

At Step S200, the display device 2 detects users who exist in the vicinity thereof by using the camera 22 or the sensor unit 25. In a case where a user comes near the front of the display screen 20, for example, the display device 2 detects it. Note that it is also possible to omit Step S200. In a case where the display device 2 detects the users (Y), the processing flow proceeds to Step S201. Note that this user detection may be detection of an operation of pressing a hardware button on the operation input unit 283 provided in the display device 2 by the user, an operation of touching the touch panel, which is the display unit 250 by the user, or an operation of pressing a specific software button (GUI parts) in the display screen 20 by the user.

At Step S201, the display device 2 detects information terminals 1, each of which is a wireless device that exists in the vicinity, by using the communication unit 260 (FIG. 5), the camera 22, or the sensor unit 25. This wireless device detection is to receive and detect a beacon (a radio signal) emitted by the information terminal 1, for example. The beacon has information such as a device name or a device address of the information terminal 1 (for the sake of explanation, which may be described as "device ID information"). In the present embodiment, at Step S201, the display device 2 obtains information on a pair of a device name and a device address of each information terminal 1 on the basis of the beacon from the corresponding information terminal 1. Note that as the other detecting means, the display device 2 may determine and detect wireless devices on the basis of analysis of an image photographed by the camera 22.

At Step S202, the display device 2 displays the following device list on the display screen 20 by using the information detected and obtained at Step S201.

### [Screen Example (1)]

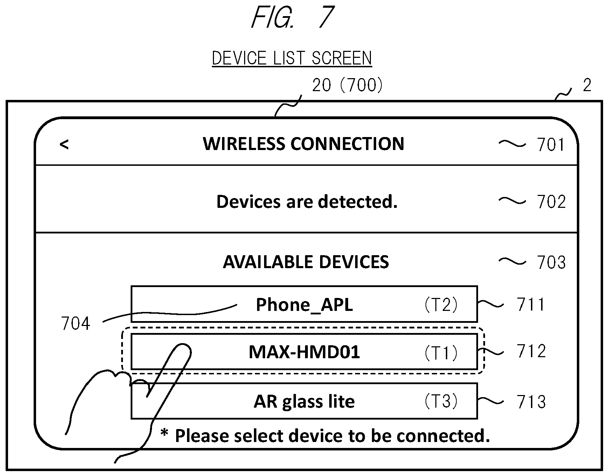

FIG. 7 illustrates a screen example when the device list is displayed on the display screen 20 of the display device 2 at Step S202. This screen 700 is a device list screen of a wireless connection menu screen. This screen 700 includes "wireless connection" menu display 701, "devices are detected" message display 702, and "available devices" display 703. The "available devices" display 703 includes device list display. As an example, this device list includes items 711, 712, and 713 as three device information items corresponding to a case where information terminals 1 (for example, the information terminals T1, T2, and T3 illustrated in FIG. 1 and FIG. 2), which are three wireless devices, are detected in the vicinity of this display device 2. A device name 704 is displayed in each device information item. This device name 704 is information such as a character string in a format that allows the user to identify the information terminal 1. The device name 704 to be displayed in the device information item is not limited to this, and may be other information such as a device address so long as it is a format that allows the user to visually identify the information terminal 1.

For example, it is assumed that the device name 704 ("Phone_APL") in the item 711 is a device name of the information terminal T2; the device name 704 ("MAX-HMD01") in the item 712 is a device name of the information terminal T1; and the device name 704 ("AR glass lite") of the item 713 is a device name of the information terminal T3. For the sake of explanation, in FIG. 7, a code "(T1)" of the corresponding information terminal 1 is described in the device information item so that the correspondence relationship can be easily understood, but it is not actually displayed.

Each device information item is composed of GUI parts such as buttons that accept selection operations (for example, touch operations) by the user as well as the display of the device name 704. Alternatively, another selection button or the like may be provided in parallel with the device information item.

Note that other GUIs may be displayed in this screen 700. For example, a message image such as "Please select a device to be connected" may be displayed as information for guiding the user in his or her operation in an easy-to-understand manner. Further, a user interface is not limited to the display on the display screen 20, and voice output or the like may be used in combination.

Note that the three device (the information terminals 1) whose device information items are displayed in this device list screen are devices for which wireless connection is permitted. In case of devices for which wireless connection is not permitted, such items are not displayed. As an application, in case of setting to permit wireless connection between a specific information terminal 1 and a specific display device 2, the specific display device 2 displays a corresponding device information item only when the detected device corresponds to the specific information terminal 1.

Further, as another application, the display device 2 may be set with limitations such as the number of devices for simultaneous wireless connection. In that case, the display device 2 may display device information items so as to fall within the number of devices for simultaneous wireless connection. Alternatively, for example, in a case where the number of devices for simultaneous wireless connection is one, the display device 2 may display a plurality of device information items on the screen, and permit wireless connection to only one information terminal 1 of them by a method such as a first-come-first-served method. The applied control as described above can be realized additionally as a control of a layer different from the authentication of the present system.

Note that when the display device 2 displays a plurality of device information items in the device list screen or the like, the display device 2 may display a plurality of items side by side in accordance with the order of the detected wireless devices. Alternatively, the display device 2 may display a plurality of items side by side in accordance with the order of a distance of each of the detected wireless devices. For example, the display device 2 may display a device information item of a wireless device estimated to exist in the nearest vicinity (that is, be likely to be selected) at the top thereof, or may display it in the most emphasized and enlarged manner.

The explanation returns to FIG. 6. At Step S203, the display device 2 receives a selection operation of a device information item (the device name 704) by the user from the device list. For example, the user U1 recognizes the second item 712 having the device name 704 corresponding to the information terminal T1, which is the own device, from the device list of the screen 700 illustrated in FIG. 7, and carries out a selection operation for it. The selection operation is a touch operation against the touch panel, which is the display unit 250 (FIG. 5), for example. The display device 2 grasps the information terminal 1 (for example, the information terminal T1) having the device name 704, which is selected by the user.

At Step S204, the display device 2 generates a passkey, which is an authentication ID for wireless connection, for the above selected device (the information terminal 1).

At Step S205, the display device 2 generates a predetermined code (coded image) according to the first embodiment by using a set of the device name selected at Step S203 described above and the passkey generated at Step S204 described above. This code is generated in the form of a QR code, which is a two-dimensional code, for example.

At Step S206, the display device 2 displays authentication information, which contains the coded image generated at Step S205 described above, in the display screen 20.

### [Screen Example (2)]

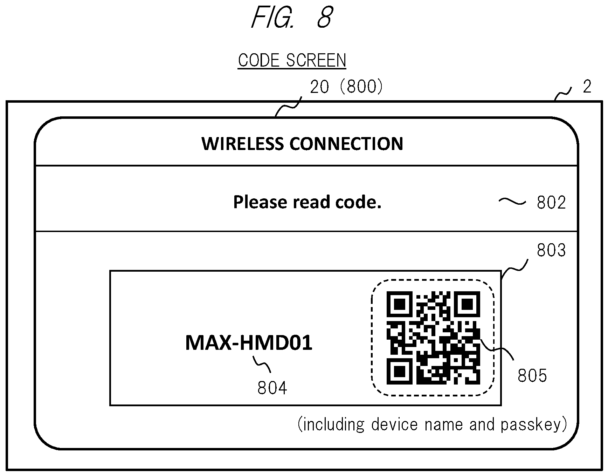

FIG. 8 illustrates a screen example when a coded image is displayed on the display screen 20 of the display device 2 at Step S206. This screen 800 is a code screen of the wireless connection menu screen. This screen 800 includes "please read code" message display 802, and authentication information display 803. The authentication information display 803 is one item, and includes a pair of a device name 804 and a code (coded image) 805. The device name 804 has the same value as the device name 704 of the selected item 712 illustrated in FIG. 7. The device name 804 is information supplementarily provided so that the user can easily grasp the items of this authentication information display 803 when the user views it, that is, the user can grasp that it is an item regarding the own device. The display of the device name 804 can be omitted. The code 805 is a QR code, and must be displayed. This QR code includes the selected device name, and is one of features. The user looks at the authentication information display 803 on the screen 800.

The explanation returns to FIG. 6. On the other hand, at Step S100, the information terminal 1 causes the camera 12 to read the code 805 displayed on the display screen 20 as illustrated in FIG. 8 on the basis of an operation of the user, for example, an operation of causing the camera 12 of the HMD 1A to photograph the display screen 20. The information terminal 1 recognizes a portion of the code 805 from an image photographed by the camera 12, and extracts the set of the device name and the passkey from the code 805 by decoding.

At Step S101, the information terminal 1 executes device check processing on the information terminal 1 side by using the set of the device name and the passkey obtained by extraction at Step S100 described above. This device check processing is confirmation of whether the device name obtained from the code 805 matches the device name of the own device or not. In other word, this device check processing is confirmation of whether one-to-one wireless connection between this information terminal 1 and the display device 2 in front of the user is appropriate or not. The device check at Step S101 is essential in the sequence according to the first embodiment, and is one of the features. In a case where the device names match each other (OK), the processing flow proceeds to Step S102. In a case where the device names do not match each other (NG), the processing flow proceeds to Step S104. In a case where the device names match each other, it represents that the information terminal 1 and the display device 2 of the other party have a relationship of appropriate wireless connection. In a case where the device names do not match each other, it represents that the information terminal 1 and the display device 2 of the other party do not have a relationship of appropriate wireless connection, that is, that wireless connection is not permitted.

At Step S104, the information terminal 1 executes error display on the display surface 11 as error processing. As a result, the flow on the information terminal 1 side is ended. In this case, the flow restarts from the beginning thereof.

At Step S102, the information terminal 1 sets the passkey obtained at Step S100 to the circuit of the communication unit 160 (FIG. 4) as the authentication ID for the wireless connection.

At Step S103, the information terminal 1 transmits a wireless connection request to the display device 2 by communication processing of the communication unit 160. At this time, a circuit of the communication unit 160 executes the communication processing using the passkey set at Step S102. In a communication frame of this wireless connection request, information containing the passkey is described together with the address and the device name of a transmission source (the information terminal 1).

On the other hand, at Step S207, the display device 2 receives the wireless connection request from the information terminal 1 by the communication processing of the communication unit 260 (FIG. 5). At this time, a circuit of the communication unit 260 executes communication processing by using the passkey generated at Step S204. The display device 2 takes out the passkey from the transmission source (the information terminal 1) in the wireless connection request, and receives the wireless connection request as a proper request in a case where the passkey matches the passkey at Step S204.

At Step S208, the display device 2 executes device check processing on the display device 2 side by using the device name taken out from the request of the information terminal 1 at Step S207 and the device name generated at Step S205. In this device check processing, for example, the display device 2 confirms whether the device name at Step S207 matches the device name at Step S204 or not. In a case where the device names match each other (OK), the processing flow proceeds to Step S209. In a case where the device names do not match each other (NG), the processing flow proceeds to Step S211. In a case where the device names match each other, it represents that wireless connection between the information terminal 1 of a request source and this display device 2 is appropriate. In a case where the device names do not match each other, it represents that the wireless connection between the information terminal 1 of the request source and this display device 2 is not appropriate, that is, that the wireless connection is not permitted.

At Step S211, the display device 2 executes error display on the display screen 20 as error processing. As a result, the flow on the display device 2 side is ended. In this case, the flow restarts from the beginning thereof.

At Step S209, the display device 2 sets the passkey generated at Step S204 described above to the circuit of the communication unit 260 (FIG. 5) as the authentication ID for the wireless connection. As a result, the same passkey is set to both the information terminal 1 and the display device 2.

At Step S210, the display device 2 establishes the wireless connection with the information terminal 1 by the communication processing of the communication unit 260. Correspondingly, at Step S105, the information terminal 1 establishes the wireless connection with the display device 2 by the communication processing of the communication unit 160. After Steps S105 and S210, the present sequence is ended. In a state where the wireless connection between the information terminal 1 and the display device 2 has been established, it is possible to actually transmit and receive data between the devices. Then, the wireless connection between these devices is disconnected if necessary.

Note that a characteristic portion (a portion related to main authentication) in the sequence according to the first embodiment is shown by a broken line frame. In particular, the device check at Step S101 is a unique process using the device name, and is a process of confirming an appropriate relationship in a case where the display device 2 is viewed from the information terminal 1. It is also a process of confirming an appropriate one-to-one relationship between the information terminal 1 and the display device 2 even in multiple-to-multiple environment. Further, in particular, this sequence also includes the device check on the display device 2 side at Step S208 in addition to the device check on the information terminal 1 side at Step S101. This process is also a unique process using the device name, and is a process of confirming an appropriate relationship in a case where the information terminal 1 is viewed from the display device 2. In the first embodiment, simple and appropriate wireless connection that does not require the user to carry out an input operation for a recognition ID can be realized by the sequence including the mutual device checks at Step S101 and Step S208.

Note that as a modification example of the first embodiment, it is also possible to omit the device check processing on the display device 2 side at Step S208.

### [Effects and The Like (1)]

As described above, according to the first embodiment, it is possible to reduce the time and effort of the user to carry out the input operation for the authentication ID such as a passkey when the information terminal 1 of the user is wirelessly connected to the display device 2 in the environment. Even in the multiple-to-multiple environment, appropriately secure wireless connection between the desired information terminal 1 thus selected and the display device 2. The user may carry out an operation of selecting an item corresponding to the own device on the display screen 20 (FIG. 7) of the display device 2, and causing the information terminal 1 to read a displayed code (FIG. 8). Then, the information terminal 1 automatically executes the device check (S101 of FIG. 6), and confirms the appropriateness of the wireless connection between the own device and the display device 2 of the other party. As a result, the passkey is set automatically (S102, S209), and the wireless connection is established. Thus, the user can quickly make wireless connection between the desired information terminal 1 and the desired display device 2 with little effort and without mistakes even in multiple-to-multiple environment.

The case where the wireless connection is permitted in a basically free combination between the plurality of devices and the plurality of devices in the environment has been described in the first embodiment. However, the present invention is not limited to this. As an application, more detailed control regarding availability of wireless connection is also possible. For example, settings regarding authentication can be made in advance so that wireless connection of a certain type of information terminal 1 of a user is permitted only with a certain type of display device 2. This authentication can be executed as authentication of a different layer from that of the authentication (including the device check) that has been described in the first embodiment and the like.

As an example of usage, in a store such as a restaurant, each user who is a customer can cause his or her information terminal 1 to be wirelessly connected to a desired display device 2 selected from a plurality of display devices 2 (for example, tablet terminals) respectively installed on tables or the like in the store easily, and use a display function, an order function, and a payment function included in the display device 2. As another example, payment devices each having a cashless payment function are prepared as a plurality of display devices 2 in a sales store or the like. A customer can cause his or her information terminal 1 to be wirelessly connected to a selected payment device, and use the cashless payment function thereof. As still another example, a display device 2 is installed for each seat in a vehicle. A passenger can cause his or her information terminal 1 to be wirelessly connected to a selected the display device 2, and use a display function for a moving image or the like, and an Internet connection function. Further, in any of the examples, it is not limited to the use of an unspecified number of people, it is also possible to restrict the use so that only wireless connection between an information terminal 1 of a specific user and a specific display device 2 and the use of functions are permitted through settings of authentication.

In the above, the case where the user uses the HMD 1A as the information terminal 1 has mainly been described. However, the present invention can similarly be applied to a case where the smartphone 1B (FIG. 1) is used. In this case, the user operates the smartphone 1B held by his or her hand. For example, the user may cause a camera of the smartphone 1B to photograph the display screen 20 of the display device 2.

### (Second Embodiment)

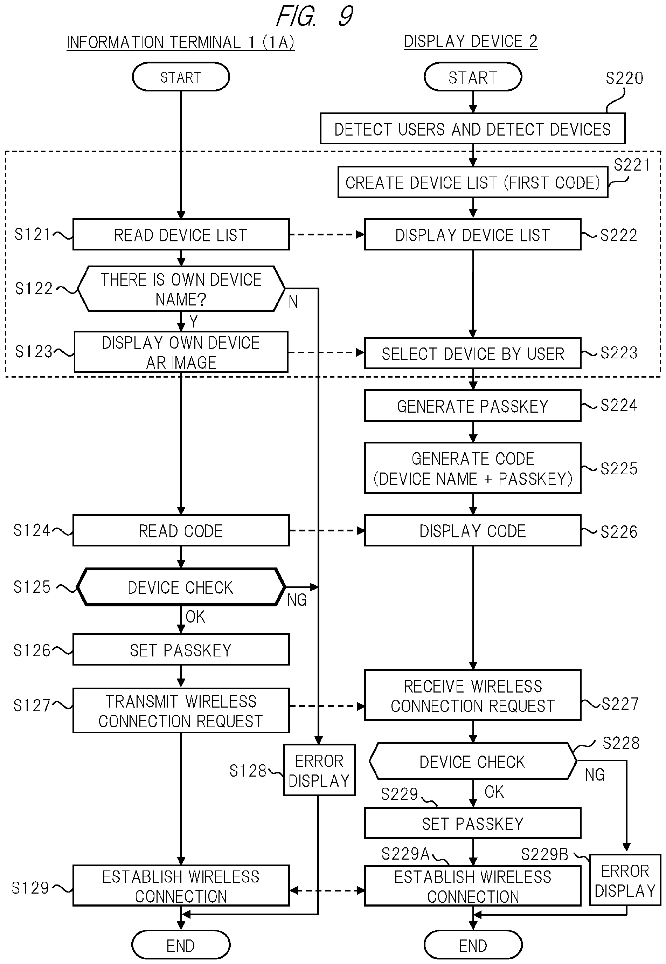

A wireless connection system and a method thereof according to a second embodiment of the present invention will be described with reference to FIG. 9 to FIG. 11. Hereinafter, portions of the second embodiment and the like different from those of the first embodiment will be described. A system configuration of the second embodiment and the like is similar to that illustrated in FIG. 1 and the like. As a different configuration point, there is a processing sequence including authentication. In the second embodiment, an AR image display function by the HMD 1A is used.

### [Processing Flow (2)]

FIG. 9 illustrates a processing sequence including communication between an information terminal 1 (for example, an HMD 1A) and a display device 2 and a processing flow of each device in a wireless connection system and a method thereof according to the second embodiment. FIG. 9 includes Steps S121 to S129 for the information terminal 1 and Steps S220 to S229, S229A, and S229B for the display device 2. In FIG. 9, Steps mainly different from those in FIG. 6 according to the first embodiment are Steps S121, S122, and S123, and Steps S221, S222, and S223. Steps after Step S124 and Steps after Step S224 are substantially similar to Steps after Step S100 and Steps after Step S204 of FIG. 6.

At Step S220, the display device 2 detects users who exist in the vicinity thereof, and detects information terminals 1, which are wireless devices that exist in the vicinity thereof. After Step S221, at Step S222, the display device 2 creates a device list including codes unique in the second embodiment (referred to as a "first code") by using information such as device names detected and obtained as described above. In the second embodiment, this first code is a coded image such as a QR code in which a device name is coded for each detected the information terminal 1, and does not include the passkey described above. Information to be coded is not limited to the device name, and may be another information such as a device address.

At Step S202, the display device 2 displays the device list created as described above on the display screen 20 as described below.

### [Screen Example (3)]

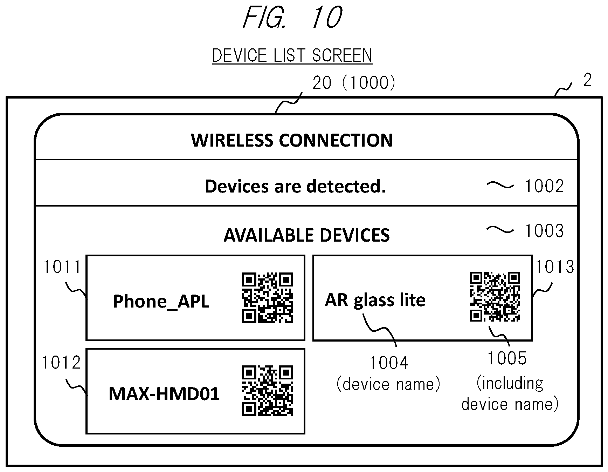

FIG. 10 illustrates a screen example when the device list including the first code is displayed on the display screen 20 of the display device 2 at Step S222. This screen 1000 is a device list display screen of a wireless connection menu screen. This screen 1000 includes "devices are detected" message display 1002 and device list display 1003. Device information items for each detected device (the information terminal 1) are displayed in parallel in the device list display 1003 as the device list. In the present embodiment, items 1011, 1012, and 1013 are included as three device information items regarding the three detected information terminals 1. Each device information item includes device name display 1004 and QR code display 1005. The device name display 1004 is auxiliary information for conveying the detected devices to a user. A QR code of the QR code display 1005 is the first code.

The explanation returns to FIG. 9. At Step S223, the user carries out a selection operation for a device information item corresponding to his or her information terminal 1 (the HMD 1A), for example, the item 1012 from the device list of this screen 1000 with reference to the device name display 1004. At this time, in the second embodiment, Steps S121 to S123 are provided to support this selection operation.

At Step S121, the information terminal 1 reads the device list (FIG. 10) of the display screen 20 of the display device 2 by the camera 12. The information terminal 1 recognizes the device name display 1004 or the QR code display 1005 of each device information item in the device list display 1003 from an image of the camera 12.

At Step S122, the information terminal 1 confirms whether there is the device name display 1004 corresponding to the device name (character string) of the own device (the HMD 1A) or not from the above read device list. In a case where there is one, the information terminal 1 detects it. Alternatively, the information terminal 1 may execute similar determination and detection by using the extracted device name by decoding the QR code of the QR code display 1005. In the example of FIG. 10, it is assumed that the HMD 1A (the information terminal T1 illustrated in FIG. 1) detects the device name ("MAX-HMD01") of the device name display 1004 in the item 1012. In a case where there is an own device name (Y), the processing flow proceeds to Step S123. In a case where there is no own device name (N), the processing flow proceeds to Step S128, and error display is executed.

At Step S123, the information terminal 1 displays, on the display surface 11, an image for conveying the device information item corresponding to the detected own device name to the user. This image is an AR image for highlighting the item and prompting the user to operate it. This AR image is superimposed and displayed on the device information item (the item 1012) of the display screen 20 as described below.

### [Screen Example (4)]

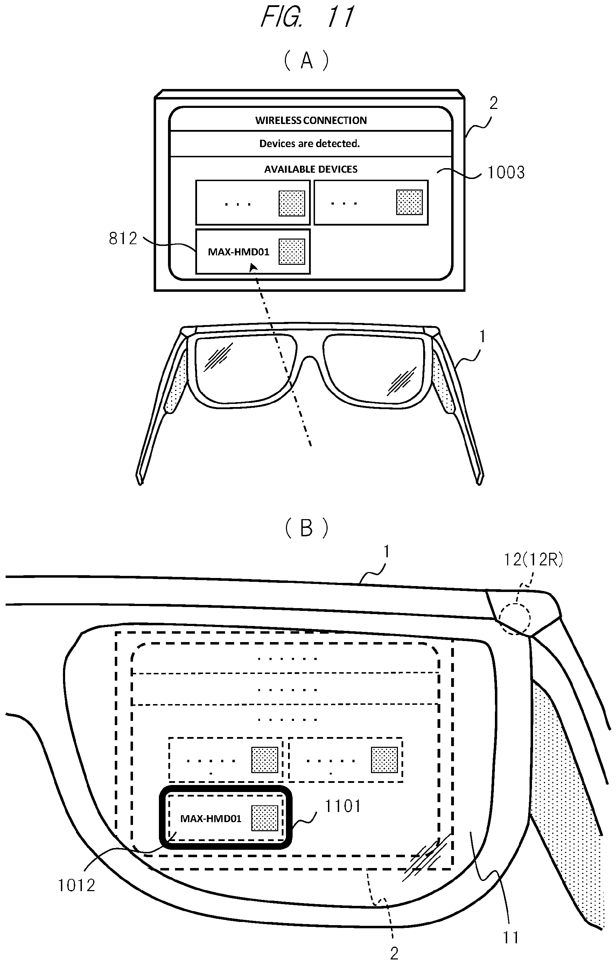

FIG. 11 illustrates an example of displaying the image at Step S123 on the display surface 11 of the HMD 1A. (A) of FIG. 11 illustrates a schematic image when a user (whose illustration is omitted) looks at the display screen 20 of the display device 2 (for example, the screen 1000 illustrated in FIG. 10) through the HMD 1A worn on a head of the user. (B) of FIG. 11 illustrates a schematic image when the item 1012 of the screen 1000 is viewed from a point of view of the user through the display surface 11 of the HMD 1A. The display surface 11 is a transmissive display surface capable of displaying an AR image. The camera 12 of the information terminal 1 captures the display screen 20. The user looks at the device list of the display screen 20. Here, the display device 2 that can be seen through the display surface 11 is schematically illustrated by a broken line. The HMD 1A (the display unit 150 illustrated in FIG. 4) displays an AR image 1101 on the display surface 11 on the basis of analysis and the like of the image of the camera 12 so as to be superimposed and displayed on the item 1012 (the item corresponding to an own device name) of the screen 1000. This AR image 1101 is an image having a meaning of prompting the user to carry out a selection operation for this device information item. In the present embodiment, the AR image 1101 is a frame image that surrounds the item 1012, but is not limited to this. For example, the AR image 1101 may be an image that surrounds the device name display 1004 illustrated in FIG. 10, an image that surrounds the QR code display 1005, or an image such as an arrow accompanied by a message such as "Please select this item". The user can understand that the user may pay attention to the item 1012 to carry out a selection operation in accordance with this AR image 1101. This makes the selection operation at Step S223 easier.

The explanation returns to FIG. 9. At Step S203, the user carries out a selection operation for an item corresponding to the own device from the above device list in accordance with the AR image 1101 at Step S123. The display device 2 receives the selection operation, and grasps the selected device name.

Steps after Step S224 are substantially similar to Steps after Step S204 illustrated in FIG. 6 according to the first embodiment. At Step S224, the display device 2 generates a passkey for the above selected device. At Step S225, the display device 2 uses the above passkey and the above selected device name to generate a predetermined code as a second code according to the second embodiment in the format of a QR code, for example. At Step S206, as well as FIG. 8, the display device 2 displays the above generated code (the second code) on the display screen 20. On the other hand, at Step S124, the information terminal 1 reads the code (the second code) on the display screen 20 on the basis of an operation of the user, and extracts a set of the device name and the passkey by decoding. At Step S125, the information terminal 1 executes device check processing by using the above set of the device name and the passkey. In a case where the extracted device name and the own device name match each other (OK), the processing flow proceeds to Step S126. In a case where the device names do not match each other (NG), the processing flow proceeds to Step S128, and error display is executed. The device check at Step S125 is an essential process in the second embodiment.

At Step S126, the information terminal 1 sets the passkey obtained at Step S124 to a circuit of the communication unit 160 (FIG. 4). At Step S127, the information terminal 1 transmits a wireless connection request to the display device 2 by communication processing of the communication unit 160. On the other hand, at Step S227, the display device 2 receives the wireless connection request from the information terminal 1 by communication processing of the communication unit 260 (FIG. 5). The display device 2 takes out information such as the passkey from the received wireless connection request. At Step S228, the display device 2 executes device check processing by using the information such as the passkey obtained at Step S227. In a case where device names match each other (OK), the processing flow proceeds to Step S229. In a case where the device names do not match each other (NG), the processing flow proceeds to Step S229B, and error processing is executed. At Step S229, the display device 2 sets the above passkey to a circuit of the communication unit 260. At Step S229A, the display device 2 establishes wireless connection with the information terminal 1 by the communication processing of the communication unit 260. Correspondingly, at Step S129, the information terminal 1 establishes wireless connection with the display device 2 by the communication processing of the communication unit 160.

### [Effects and The Like (2)]

As described above, in the second embodiment, the information terminal 1 of the user automatically recognizes the item corresponding to the own device from the device list of the display screen 20 of the display device 2, and conveys it to the user by the AR image (Step S123 of FIG. 9, FIG. 11). As a result, the user can easily select the item corresponding to the own device, and quickly proceed to the procedure for authentication to make wireless connection.

Note that as a modification example of the second embodiment, it is also possible to omit the device check processing on the display device 2 side.

### (Third Embodiment)

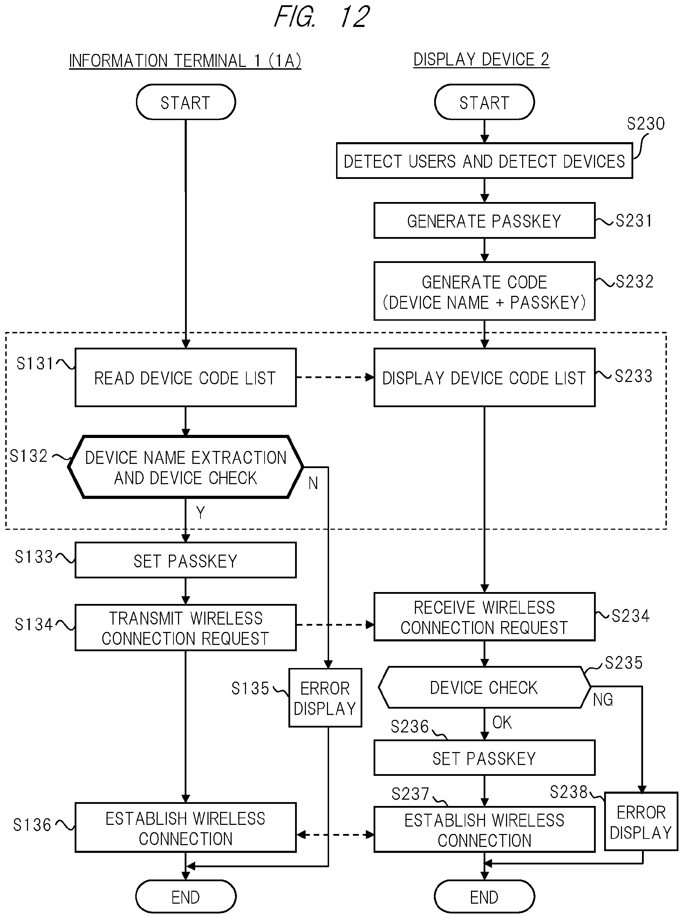

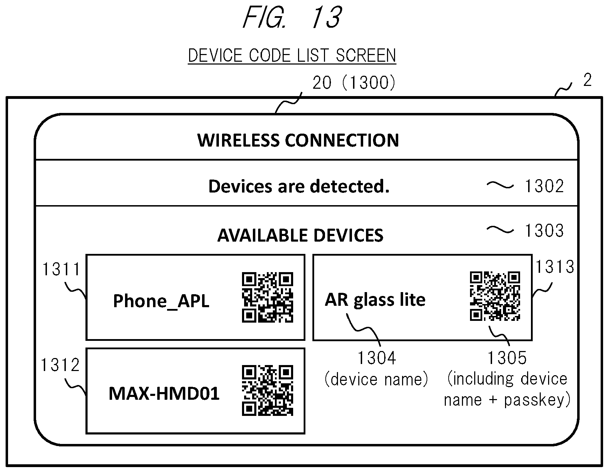

A wireless connection system and a method thereof according to a third embodiment of the present invention will be described with reference to FIG. 12 and FIG. 13. In the third embodiment, an information terminal 1 finds an own device from a device list on a display screen 20 of a display device 2, and automatically executes authentication and wireless connection without requiring a selection operation by a user.

### [Processing Flow (3)]

FIG. 12 illustrates a processing sequence including communication between an information terminal 1 (for example, an HMD 1A) and a display device 2 and a processing flow of each device in a wireless connection system and a method thereof according to the third embodiment. FIG. 12 includes Steps S131 to S136 for the information terminal 1 and Steps S230 to S238 for the display device 2. As a configuration point mainly different from FIG. 6 and FIG. 9, FIG. 12 includes Steps S131 and S132 for the information terminal 1, and Step S233 for the display device 2.

At Step S230, the display device 2 executes user detection and device detection. At Step S231, the display device 2 generates a passkey. At Step S232, the display device 2 generates a predetermined code according to the third embodiment. This code is an image obtained by coding a set of a device name and the passkey in the format of a QR code, for example. Next, at Step S233, the display device 2 displays a device code list created using the code generated at Step S232 on the display screen 20.

### [Screen Example (5)]

FIG. 13 illustrates a screen example when the device code list is displayed on the display screen 20 of the display device 2 at Step S233. This screen 1300 is a device code list display screen of a wireless connection menu screen. This screen 1300 includes "Devices are detected" message display 1302, and device code list display 1303. In the device code list display 1303, device code information items for each detected device (the information terminal 1) are displayed in parallel as a device code list. In the present embodiment, items 1311, 1312, and 1313 are provided as three device code information items regarding three detected information terminals 1. Each device code information item includes device name display 1304 and QR code display 1305. The device name display 1304 is auxiliary information for conveying a detected device to the user, and display thereof can be omitted. A QR code of the QR code display 1305 is a predetermined code according to the third embodiment, and is obtained by coding the set of the device name and the passkey. It can be said that the screen 1300 illustrated in FIG. 13 is streamlined by integrating the device list screen illustrated in FIG. 7 and the code screen illustrated in FIG. 8 according to the first embodiment into one.

The explanation returns to FIG. 12. At Step S131, the information terminal 1 reads the device code list on the display screen 20 of the display device 2 by a camera 12. The information terminal 1 recognizes the device name display 1304 and the QR code display 1305 of each device code information item from an image of the camera 12.

At Step S132, the information terminal 1 extracts the set of the device name and the passkey from the QR code of the QR code display 1305 obtained at Step S131 by decoding. The information terminal 1 executes device check processing by using the extracted device name. This processing is a process of extracting, in a case where there is a device name of the own device (the HMD 1A), the device name from one or more obtained device names, and is a unique and indispensable process in the third embodiment. In a case where the own device name can be detected (Y), the processing flow proceeds to Step S133. In a case where the own device name cannot be detected (N), the processing flow proceeds to Step S135, and error display is executed.

Processes after Step S133 are substantially similar to those according to the first embodiment described above. At Step S133, the information terminal 1 sets the passkey obtained at Step S131 to a circuit of the communication unit 160. At Step S134, the information terminal 1 transmits a wireless connection request to the display device 2 by communication processing of the communication unit 160. On the other hand, at Step S234, the display device 2 receives the wireless connection request from the information terminal 1 by communication processing of the communication unit 260. The display device 2 takes out information such as the device name and the passkey from the received wireless connection request. At Step S235, the display device 2 executes device check processing on the display device 2 side by using the device name at Step S232 and the device name obtained at Step S234. In a case where the device names match each other (OK), the processing flow proceeds to Step S236. In a case where the device names do not match each other (NG), the processing flow proceeds to Step S238, and error processing is executed. At Step S236, the display device 2 sets the above passkey to a circuit of the communication unit 260. At Step S237, the display device 2 establishes wireless connection with the information terminal 1 by the communication processing of the communication unit 260. Correspondingly, at Step S136, the information terminal 1 establishes wireless connection with the display device 2 by the communication processing of the communication unit 160.

### [Effects and The Like (3)]

As described above, in the third embodiment, the information terminal 1 of the user recognizes the item corresponding to the own device from the device code list (FIG. 13) on the display screen 20 of the display device 2, and automatically proceed to the procedure for authentication to make wireless connection quickly.

Note that as a modification example of the third embodiment, it is also possible to omit the device check processing on the display device 2 side.

### (Fourth Embodiment)

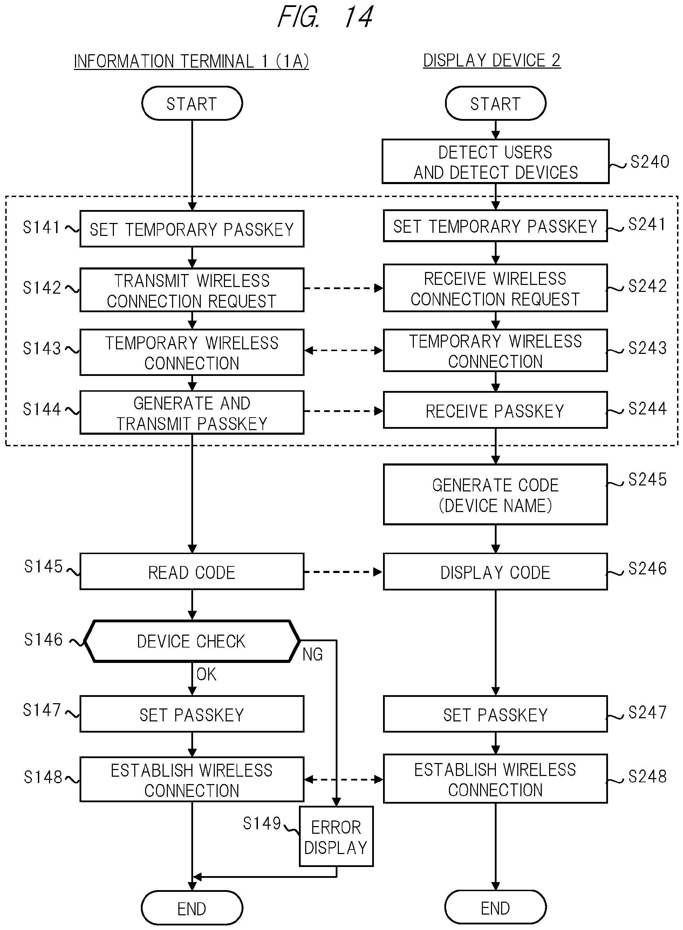

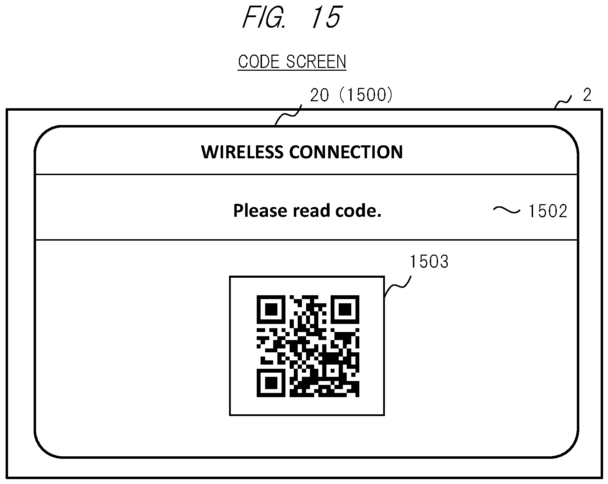

A wireless connection system and a method thereof according to a fourth embodiment of the present invention will be described with reference to FIG. 14 and FIG. 15. In the fourth embodiment, temporary connection is first executed between an information terminal 1 and a display device 2, and authentication and wireless connection are then executed.

### [Processing Flow (4)]

FIG. 14 illustrates 1000) a processing sequence including communication between an information terminal 1 (for example, an HMD 1A) and a display device 2 and a processing flow of each device in a wireless connection system and a method thereof according to the fourth embodiment. FIG. 14 includes Steps S141 to S149 for the information terminal 1 and Steps S240 to S248 for the display device 2. As a mainly different configuration point, FIG. 14 includes Steps S141 to S144 for the information terminal 1 and Steps S241 to S244 for the display device 2.

At Step S240, the display device 2 executes user detection and device detection. At Step S141, the information terminal 1 sets a temporary passkey for temporary connection to a circuit of the communication unit 160 (FIG. 4). For the temporary passkey, for example, if a passkey has 6 digits, a fixed value such as 0000000 is used. On the other hand, at Step S241, the display device 2 sets the same temporary passkey to a circuit of the communication unit 260 (FIG. 5).

At Step S142, the information terminal 1 transmits a wireless connection request for the temporary connection to the display device 2 by using the above temporary passkey. At Step S242, the display device 2 receives the wireless connection request. As a result, at Steps S143 and S243, temporary wireless connection is executed between the information terminal 1 and the display device 2.

At Step S144, the information terminal 1 generates a passkey for wireless connection for a non-temporary purpose, and transmits it to the display device 2. At Step S244, the display device 2 receives the passkey from the information terminal 1.

At Step S245, the display device 2 generates a predetermined code according to the fourth embodiment. In the fourth embodiment, this code is an image in which only a device name is coded in the format of a QR code, for example. At Step S246, the display device 2 displays the above generated code on the display screen 20 as described below.

### [Screen Example (6)]

FIG. 15 illustrates a screen example when the code is displayed on the display screen 20 of the display device 2 at Step S246. This screen 1500 is a code screen of a wireless connection menu screen. This screen 1500 includes "Please read code" message display 1502 and code display 1503. The code display 1503 is a QR code related to a device name of one target device (the information terminal 1).

The explanation returns to FIG. 14. At Step S145, the information terminal 1 reads the code (the code display 1503) displayed on the above display screen 20 by a camera 12. The information terminal 1 extracts the device name from the code by decoding. Then, at Step S146, similar to the first embodiment, the information terminal 1 executes device check processing by using the above extracted device name. The information terminal 1 confirms whether the above extracted device name matches a device name of an own device (the HMD 1A) or not. In a case where the device names match each other (OK), the processing flow proceeds to Step S146. In a case where the device names do not match each other (NG), the processing flow proceeds to Step S149, and error display is executed. At Step S146, the information terminal 1 sets the passkey generated at Step S144 to the circuit of the communication unit 160 for the target wireless connection. On the other hand, at Step S247, the display device 2 side also sets the passkey received at Step S244 to the circuit of the communication unit 260 for the target wireless connection. As a result, at Steps S148 and S248, the wireless connection between the information terminal 1 and the display device 2 is established. In other word, the temporary wireless connection is ended, and the target wireless connection is achieved.

### [Effects and The Like (4)]

As described above, in the fourth embodiment, after the information terminal 1 and the display device 2 are temporarily connected, the information terminal 1 can execute the device check using the code of the device name, and quickly executes the wireless connection.

Note that as a modification example of the fourth embodiment, it is also possible to omit the device check processing on the display device 2 side.

### (Another Embodiment)

The following is also possible as another embodiment. In the configuration illustrated in FIG. 1 according to the first embodiment, the case where the information terminal 1 and the display device 2 are wirelessly connected to each other directly at a short distance has been described. However, the present invention is not limited to this. It is also possible to make wireless connection between the information terminal 1 and the display device 2 via a device such as a wireless base station or an access point is also possible. Further, it is also possible for the information terminal 1 and the display device 2 to communicate with and cooperate with an external apparatus such as a server on a communication network.

As described above, the present invention has specifically been described on the basis of the embodiments. However, the present invention is not limited to the embodiments described above, and the present invention may be modified into various forms without departing from the substance thereof.

### REFERENCE SIGNS LIST

1, T1, T2, T3, TM ... information terminal, 1A ... HMD, 1B ... smartphone, 2, D1, D2, DN ... display device, 11 ... display surface, 12 ... camera, 20 ... display screen, 22 ... camera, U1, U2, U3, UM ... user.

## Claims

1. A wireless connection system for executing wireless connection between an information terminal of a user and a display device installed in environment,
wherein the display device is configured to:
display, in a case where an information terminal existing in a vicinity thereof is detected, device ID information related to authentication for wireless connection with the detected information terminal or an image obtained by coding the device ID information on a display screen; and
establish the wireless connection by using an authentication ID for the wireless connection with the information terminal, and
wherein the information terminal is configured to:
read the device ID information or the image on the display screen of the display device;
confirm whether the read device ID information matches device ID information of an own device or not; and
establish, after the matching is confirmed, the wireless connection using the authentication ID for the wireless connection with the display device.

2. The wireless connection system according to claim 1,
wherein in a case where a plurality of the information terminals and a plurality of the display devices exist in the environment,
the display device is configured to:
display, in a case where a plurality of information terminals existing in the vicinity thereof is detected, a device list including the device ID information of each of the detected information terminals on the display screen;
display a coded image on the display screen in a case where any device ID information is selected from the device list on a basis of an operation of the user, the coded image being obtained by coding the selected device ID information and the authentication ID for the information terminal having the selected device ID information;
confirm, in a case where a wireless connection request is received from the information terminal, whether the device ID information accompanying the wireless connection request matches the selected device ID information or not; and
set the authentication ID for the wireless connection in a case where the two kinds of device ID information match each other, and
the information terminal is configured to:
read the coded image from the display screen; extract the device ID information and the authentication ID by decoding;
confirm whether the extracted device ID information matches the device ID information of the own device or not;
set the extracted authentication ID for the wireless connection in a case where the two kinds of device ID information match each other; and
transmit the wireless connection request accompanied by the device ID information to the display device.

3. The wireless connection system according to claim 1,
wherein in a case where the device ID information of the own device is contained in the information read from the display screen of the display device,
the information terminal is configured to:
detects the device ID information of the own device; and
display an image for prompting the user of the detect device ID information to carry out a selection operation on a display surface of the own device so as to be positioned with the detected device ID information.

4. The wireless connection system according to claim 1,
wherein in a case where a plurality of the information terminals and a plurality of the display devices exist in the environment,
the display device is configured to:
generate, in a case where a plurality of information terminals existing in the vicinity thereof is detected, a coded image in which the device ID information of each of the detected information terminals and the authentication ID thereof are coded;
display a device code list including the coded images of the respective detected information terminals on the display screen;
confirm, in a case where a wireless connection request is received from any of the information terminals, whether the device ID information accompanying the wireless connection request matches the device ID information of each of the detected information terminals or not; and
set the authentication ID for the wireless connection therewith in a case where the two kinds of device ID information match each other, and
the information terminal is configured to:
read the device code list from the display screen; extract the device ID information and the authentication ID by being decoded from each of the coded images;
confirm whether there is one matching the device ID information of the own device among the plural kinds of extracted device ID information or not;
set, in a case where there is the matched device ID information, the extracted authentication ID associated with the matched device ID information for the wireless connection; and
transmit the wireless connection request accompanied by the device ID information to the display device.

5. The wireless connection system according to claim 1, wherein the display device is configured to:
set, in a case where an information terminal existing in a vicinity thereof is detected, a first authentication ID for temporary wireless connection with the detected information terminal;
execute the temporary wireless connection with the detected information terminal;
display, in a case where a second authentication ID for the wireless connection is received from the information terminal in a state of the temporary wireless connection, a coded image obtained by coding the device ID information of the information terminal on the display screen;
set the second authentication ID for the wireless connection,
wherein the information terminal is configured to:
set the first authentication ID for the temporary wireless connection with the display device;
execute the temporary wireless connection with the display device;
transmit the second authentication ID for the wireless connection to the display device in a state of the temporary wireless connection;
read the coded image from the display screen to extract the device ID information by decoding;
confirm whether the extracted device ID information matches the device ID information of the own device or not;
set the second authentication ID for the wireless connection in a case where the two kinds of device ID information match each other; and
establish the wireless connection with the display device.

6. An information terminal in a wireless connection system for executing wireless connection between an information terminal of a user and a display device installed in environment,
wherein the display device is configured to:
display, in a case where an information terminal existing in a vicinity thereof is detected, device ID information related to authentication for wireless connection with the detected information terminal or an image obtained by coding the device ID information on a display screen; and
establish the wireless connection by using an authentication ID for the wireless connection with the information terminal, and
wherein the information terminal is configured to:
read the device ID information or the image on the display screen of the display device;
confirm whether the read device ID information matches device ID information of an own device or not; and
establish, after the matching is confirmed, the wireless connection using the authentication ID for the wireless connection with the display device.

7. A display device in a wireless connection system for executing wireless connection between an information terminal of a user and a display device installed in environment,
wherein the display device is configured to:
display, in a case where an information terminal existing in a vicinity thereof is detected, device ID information related to authentication for wireless connection with the detected information terminal or an image obtained by coding the device ID information on a display screen; and
establish the wireless connection by using an authentication ID for the wireless connection with the information terminal, and
wherein the information terminal is configured to:
read the device ID information or the image on the display screen of the display device;
confirm whether the read device ID information matches device ID information of an own device or not; and
establish, after the matching is confirmed, the wireless connection using the authentication ID for the wireless connection with the display device.

8. A wireless connection method of executing wireless connection between an information terminal of a user and a display device installed in environment, the wireless connection method comprising:
in a case where an information terminal existing in a vicinity thereof is detected, displaying, by the display device, device ID information related to authentication for wireless connection with the detected information terminal or an image obtained by coding the device ID information on a display screen;
reading, by the information terminal, the device ID information or the image on the display screen of the display device;
confirming, by the information terminal, whether the read device ID information matches device ID information of an own device or not;
after the matching is confirmed, establishing, the information terminal, the wireless connection using an authentication ID for the wireless connection with the display device; and
establishing, by the display device, the wireless connection using the authentication ID for the wireless connection with the information terminal.
